# EUROPÄISCHE PATENTSCHRIFT

(11) **EP 2 551 404 B1**
(45) Veröffentlichungstag und Bekanntmachung des Hinweises auf die Patenterteilung: **13.08.2014**
(21) Anmeldenummer: 12007281.4
(22) Anmeldetag: 09.04.2008
(51) Int. Cl.: D21B 1/34

(54) **Pulper zum Recyceln eines Gemenges**
Pulper for recycling a mixture
Pulpeur pour recycler un mélange

(30) Priorität: 18.04.2007 DE 102007018553; 22.08.2007 DE 102007039744
(43) Veröffentlichungstag der Anmeldung: 30.01.2013
(62) Teilanmeldung aus: 08748733.6
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Patentanwaltskanzlei Liermann-Castell & Kollegen

(56) Entgegenhaltungen:
- EP-A1- 1 826 314
- WO-A2-2006/122538
- DE-A1- 3 311 082
- US-A- 4 129 259

## Beschreibung

Die Erfindung betrifft einen Pulper zum Recyceln eines Gemenges, in dem zum Trennen von Fasern aus dem Gemenge ein Lochblech angeordnet ist, gemäß dem Oberbegriff des vorliegenden Anspruchs 1. Ein solcher Pulper ist z.B. aus der Schrift EP 1 826 314 A1 bekannt.

Es gibt eine Vielzahl an Pulpern, die zur Aufbereitung eines Stoffgemenges verwendet werden. Ein weites Gebiet der Aufbereitung ist das Gebiet der Papierherstellung, bei dem aus Spuckstoff Fasern abgetrennt werden. Pulper werden jedoch auch zur Weiterverarbeitung landwirtschaftlicher Produkte eingesetzt. Weitere wichtige Anwendungsgebiete für derartige Pulper sind die Behandlung von faserhaltigen Stoffen aus Sperrmüll, Gewerbemüll, dem "Dualen System" und der "trockenen Tonne".

Hierbei unterscheidet man kontinuierlich und diskontinuierlich arbeitende Pulper. Bei diskontinuierlich arbeitenden Pulpern wird das Produkt in den Pulper gefüllt, über eine längere Zeit im Pulper bearbeitet und anschließend wird der Pulper entleert.

Bei kontinuierlich arbeitenden Pulpern wird während der Bearbeitung eine Stofffraktion abgetrennt und aus dem Pulper entnommen.

Insbesondere für kontinuierlich arbeitende Pulper werden Pulper verwendet, in denen ein Lochblech angeordnet ist. Derartige Lochbleche haben, Löcher von einem Durchmesser von einem bis mehreren Zentimetern, um Spuckstoffe, wie insbesondere Kunststoffe, von Faserstoffen abzutrennen. Nach der Bearbeitung der Stoffe im Pulper folgt dann eine Weiterbearbeitung der abgetrennten Begleitstoffe, insbesondere durch Sortierverfahren und die Weiterbearbeitung der abgetrennten Faserstoffe.

In der Praxis werden derartige Pulper mit relativ viel Wasser zum Herausspülen der Faserstoffe betrieben. Um gute Ergebnisse zu erzielen wird mit einer hohen Gesamtstoffdichte gearbeitet. Zur Verwendung derartiger Pulper wird auf die WO2006/122538 A2 verwiesen, in der unterschiedliche Verfahren zum Betreiben eines Pulpers beschrieben sind, die auch für den erfindungsgemäßen Pulper vorteilhaft sind.

Gute Erfahrungen mit einem derartigen Pulper wurden auch in Verbindung mit dem Aufschlagen von Biomasse, wie Kartoffeln oder Gras, aber auch Biomasse in Restmüll erzielt.

Es hat sich weiterhin als vorteilhaft herausgestellt, wenn das Lochblech zwischen den Löchern einen Abstand von weniger als 5 mm aufweist. Vorteilhaft ist zwischen den Löchern sogar ein Abstand von 0,2 bis 2 mm und in der Praxis hat sich ein Abstand von weniger als 1,5 mm als tauglich erwiesen.

Beispielsweise bei einem Einsatz als Schlitzsortierer können minimierte Stegbreiten mit Abmessungen von unter 1 mm verwendet werden. Ziel ist ein maximierter Stofffluss bei kleinen Abmessungen der Stege. Dies erschließt einen Einsatz als Entstipper, Lochsortierer, Schlitzsortierer, Faserfraktionator (lang/kurz oder braun-steif/weiß-weich), Disperger oder Deinker (ggf. unter Einsatz von Chemikalien). Das Einbringen von Mahlwerkzeugen für die Mahlfunktion in den Pulper ermöglicht den Einsatz als Mühle mit kontinuierlicher Feinstoffabtrennung durch das Lochblech, das auch als Schlitzblech ausgebildet sein kann.

Durch den geringen Abstand zwischen den Löchern wird die freie Durchgangsfläche im Lochblech erhöht. Das Lochblech wird zwar filigraner in der Ausbildung. Es ist jedoch technisch unproblematisch, derartige Lochbleche herzustellen und in einem Pulper einzubauen und zu betreiben.

In einem derartigen Pulper laufen verschiedene Umwälzprozesse ab, die zu einer Mischung des eingebrachten Gemenges oberhalb des Lochbleches sorgen. Es hat sich herausgestellt, dass besonders gute Ergebnisse mit einer externen Umwälzung erzielt wurden. Hierzu wird oberhalb des Lochblechs eine Entnahmeeinrichtung angeordnet, die mit einer Sammeleinrichtung verbunden ist, die mit einer Eintragsöffnung des Pulpers in Verbindung steht.

Die Sammeleinrichtung ist für einen Betrieb nach dem "First In First Out"-Prinzip ausgebildet ist. Die Sammeleinrichtung kann dadurch ein gewisses Volumen speichern und auch als Puffer dienen.

Die Entnahme oberhalb des Lochblechs ermöglicht es, Gemenge aus dem System Pulper zu entziehen, die Sammeleinrichtung ermöglicht es, Material hinzu zu geben oder Material abzuziehen und die Verbindung mit der Eintragsöffnung des Pulpers ermöglicht es, das gesamte entnommene Gemengevolumen oder nur einen Teil davon, gegebenenfalls unter Zumischung neuen Materials, in den Pulper einzubringen. Hierdurch wird mit einfachen Mitteln eine beliebig variierbare und steuerbare externe Rückführung erzielt.

Um innerhalb der Sammeleinrichtung das "First In First Out"-Prinzip auf einfache Art und Weise durchführen zu können, wird vorgeschlagen, dass die Sammeleinrichtung eine Fördereinrichtung aufweist. Dies ermöglicht es, die Materialien des Gemenges innerhalb der Sammeleinrichtung aktiv zu bewegen. Eine Alternative hierzu wäre beispielsweise eine Sammeleinrichtung in Form eines vertikal stehenden Silos, mit dem ebenso ein "First In First Out"-Prinzip durchgeführt werden kann.

Vorteilhaft ist es, wenn die Sammeleinrichtung einen weiteren Zulauf für Gemenge aufweist. Dies ermöglicht es einerseits neues Gemenge in dem Sammler vorzuhalten und andererseits Gemenge aus dem Pulper in den Sammler einzuführen. Vorteilhaft ist es, wenn das neue Gemenge im Sammler nach dem "First In First Out"-Prinzip gesammelt und an den Pulper abgegeben wird. Außerdem ist es vorteilhaft, wenn das aus dem Pulper stammende Gemenge im Sammler gesammelt werden kann und nach dem "First In First Out"-Prinzip dem Pulper wieder zugeführt wird.

Der Sammler hat einen ersten Ablauf für Gemenge, der mit der Eintragsöffnung des Pulpers in Verbindung steht. Vorzugsweise weist er einen weiteren Ablauf für seine Entleerung auf.

Es hat sich herausgestellt, dass ein gewisser Druck auf dem Lochblech, insbesondere bei den kleinen Lochdurchmessern, von besonderer Bedeutung ist. Daher wird vorgeschlagen, dass der Pulper über dem Lochblech eine Höhe von über 2 m aufweist. Der Druck auf das Lochblech kann beispielsweise über eine Schraube realisiert werden. Gerade die Höhe des Gemengespiegels oberhalb des Lochblechs hat jedoch eine besondere Bedeutung für einen homogenen Druck auf die Lochblechoberfläche, um auf der gesamten Lochblechoberfläche das Passieren von Rohfaserstoff zu erleichtern.

Vorteilhafterweise die Förderung innerhalb des Pulpers durch eine interne Fördereinrichtung unterstützt. Diese sollte über dem Lochblech eine Höhe von über 80 % der Pulperhöhe aufweisen. Eine derartige Fördereinrichtung kann eine Förderschraube sein. Hierfür sind jedoch auch Pumpen oder andere, beispielsweise in einem Rohr angebrachte Fördereinrichtungen, zu verwenden. Vorteilhaft ist es, wenn eine derartige Fördereinrichtung eine Höhe von über 80 % der Gemengehöhe über dem Lochblech aufweist. Hierbei wird von der üblichen Befüllhöhe des Pulpers mit dem Gemenge ausgegangen.

Für den Fall, dass die Fördereinrichtung eine senkrechte Schraube aufweist, wird vorgeschlagen, dass diese oben und unten gelagert ist. Dies erlaubt es, eine besonders lange Schraube zu verwenden und diese stabil zu führen.

Eine optimale Abstimmung von Pulper und Schraube wird erzielt, indem eine Schraube verwendet wird, deren Hüllkurve oberhalb einer über dem Lochblech angeordneten Entnahmeeinrichtung leicht konisch zur Pulperwandung verläuft. Zwischen Schraube und Pulperwandlung muss ein Spalt bleiben, um die Schraube relativ zur Wandung zu bewegen. Durch die konische Ausbildung des Spaltes zwischen der Hüllkurve der Schraube und der Wandung des Pulpers, entsteht ein definierter Spalt zwischen Schraube und Pulperwandung, dessen sich reduzierende Breite das aufströmende Gemenge zur Schraube drängt und somit die Strömungsbedingungen innerhalb des Pulpers beeinflusst. Dies erlaubt es, insbesondere oberhalb des Entnahmebereichs, die Schraube überwiegend zur Förderung zu verwenden, während sie im unteren Bereich ihre Mahlfunktion übernimmt.

Die Schraube hat in ihrem unteren Bereich eine Spirale, die einen größeren Durchmesser als der obere Bereich der Schraube aufweist und deren Hüllkurve etwa der Form der Pulperwandung in diesem Bereich nachgeführt ist. Dadurch ergibt sich ein Pulper mit einer im oberen Bereich konischen und im unteren Bereich weiter ausladenden Formgebung.

Insbesondere zum Aufschluss von Stärke, sonstiger Biomasse, Textilien usw. wird in einer bevorzugten Ausführungsform vorgesehen, dass im Pulper umlaufende Messer angeordnet sind. Diese umlaufenden Messer können in einem unteren Bereich einer Spirale angeordnet sein. Hierzu wird vorgeschlagen, eine Spirale an ihrem unteren Ende zu bemessern oder eine Spirale durch Messer zu ersetzen.

Versuche haben gezeigt, dass es vorteilhaft ist, wenn der Pulper über dem Lochblech mehrere Entnahmeeinrichtungen aufweist. Dies ermöglicht es, oberhalb des Lochbleches einheitlichere Strömungsbedingungen zu erzielen.

Daher wird weiterbildend vorgeschlagen, dass die Entnahmeeinrichtungen am Umfang des Pulpers gleich verteilt angeordnet sind. Dadurch können einheitlichere Strömungsbedingungen auf der Oberfläche des Lochblechs erzielt werden.

Je nach Höhe über dem Lochblech stellen sich im Gemenge im Pulper unterschiedliche Dichten und Zusammensetzungen ein. Es wird daher vorgeschlagen, dass der Pulper Entnahmeeinrichtungen aufweist, deren Entnahmestellen in unterschiedlichen Höhen liegen. Dadurch können auf einfache Art und Weise unterschiedliche Fraktionen aus dem Pulper entnommen werden.

Beispielsweise können im oberen Bereich des Pulpers Stoffen entnommen werden, die leichter sind als das aufzuschließende Medium. Dies ist insbesondere Wasser. Es können aber auch andere Aufschlussmittel wie z.B. Alkohol oder Salzlösungen sein. Im unteren Bereich des Pulpers können Stoffe ausgetragen werden, die schwerer als das Aufschlussmittel sind.

Je nach Winkelstellung der Entnahmeeinrichtung wird eine mehr oder weniger flüssige Fraktion aus dem Pulper entnommen. Daher wird vorgeschlagen, dass der Pulper Entnahmeeinrichtungen mit in unterschiedlichen Winkeln zur Horizontalen angeordneten Wendeln aufweist. Eine nach unten führende Entnahmeeinrichtung entnimmt dem Pulper eine feuchtere Fraktion als eine nach oben führende Entnahmeeinrichtung.

Ein spezielles Ausführungsbeispiel sieht daher vor, dass die Ausrichtung der Entnahmeeinrichtung in ihrer Winkellage zur Horizontalen einstellbar ist.

Beispielsweise kann ein Austragssystem für Stoffe, die schwerer sind als das Aufschlussmedium im unteren Bereich des Pulpers oberhalb des Lochbleches in einer Winkellage schräg nach oben halbtrocken oder tropfnass diese Stoffe aus dem Pulper entnehmen. Ein Austragssystem für Stoffe, die schwerer sind als das Aufschlussmedium, und für die Austrag von Schwerstoffen, wie Metalle Steine usw., kann im unteren Bereich des Pulpers oberhalb des Lochbleches schräg nach unten diese Stoffe nass austragen. Ein senkrecht oder fast senkrecht nach unten angeordnetes Austragssystem kann dem alleinigen Austrag von Schwerstoffen dienen und ist im Falle einer halbkontinuierlichen Fahrweise des Pulpers auch zur Pulperentleerung nutzbar.

Insbesondere in Falle einer halbkontinuierlichen Fahrweise wird vorgeschlagen, dass der Pulper einen Pulperaufsatz zur Suspensionsverdünnung aufweist.

Um einen sicheren Einzug von Gemenge und eine sichere Zufuhr des Gemenges zur Reaktionszone zu gewährleisten, wird vorgeschlagen, dass der Pulper eine weitere Schraube zum Einzug des Gemenges aufweist. Diese weitere Schraube ist vorzugsweise in einem Aufsatz angeordnet.

Vorteilhaft ist es, wenn der Pulper an seiner Innenseite und/oder eine Schraube im Pulper abgerundete und polierte Übergänge aufweist. Dadurch kann der spezifische Energiebedarf des Pulpers verringert werden, da die Reibungsverluste minimiert werden.

Eine besonders reibungsarme innere Oberfläche des Pulpers wird durch eine Beschichtung der Pulperinnenseite und/oder der Schraube erzielt. Hierzu eignen sich Nanomaterialien, die eine besonders reibungsarme Oberfläche z.B. durch den Lotuseffekt ermöglichen.

Zur Verschleißverminderung wird vorgeschlagen, dass das Lochblech zumindest an seiner Oberseite beschichtet und/oder poliert ist.

Eine stark segmentierte Ausbildung des Lochblechs vermeidet einen Wärmeverzug. Daher wird vorgeschlagen, dass das Lochblech mehrere Lochplatten aufweist. Vorteilhaft sind je nach Pulpergröße mindestens eine Platte pro Quadratmeter Lochblech, vorzugsweise 10, insbesondere 100.

Eine einfache Vormontage wird erzielt, indem die Lochplatten in Lochträgerplatten montiert sind. Dies erlaubt es, die Lochplatten als Montagesystem bereit zu stellen.Um das Gemenge mit Messern zu zerkleinern, wir vorgeschlagen, dass der Pulper eine vorgeschaltete Schneideinrichtung aufweist. Vorteilhaft ist hierbei ein Scherenschnitt z.B. mit einer Guillotine. Als Größe für die geschnittenen Schnipsel wir eine Größe unter 50 mal 50 mm wie beispielsweise etwa 30 mal 30 mm vorgeschlagen.Um auf der Oberfläche der Suspension einen Druck aufzubauen, wird vorgeschlagen, dass der Pulper einen gasdicht gekapselten Einlauf aufweist. Dies ermöglicht es, auf der Suspension ein Überdruckpolster aufzubauen und dadurch die Suspension unter Druck durch das Lochblech zu drücken.

Der Fluss durch das Lochblech kann auch dadurch erhöht werden, dass der Pulper unter dem Lochblech eine Unterdruckeinrichtung aufweist. Dies ermöglicht es, die Suspension aus dem Pulper abzusaugen. Hierbei ist bevorzugt ein Überdruck oder ein Unterdruck von mehr als 0,3 bar einzustellen.

Kumulativ oder alternativ ist vorgesehen, dass der Durchmesser des Lochblechs größer ist als die Höhe des Pulpers. Vorteilhaft ist es, wenn der Durchmesser mehr als 1,5 vorzugsweise mehr als 2 mal so groß ist wie die Höhe des Pulpers. Das deutlich erhöhte Durchmesser-zu-Höhe-Verhältnis erhöht auch bei begrenzten Drücken den Durchfluss, ohne die Trennschärfe zu verringern.

Ein Ausführungsbeispiel eines erfindungsgemäßen Pulpers ist in der Figur dargestellt und wird im Folgenden näher erläutert.

Es zeigt,

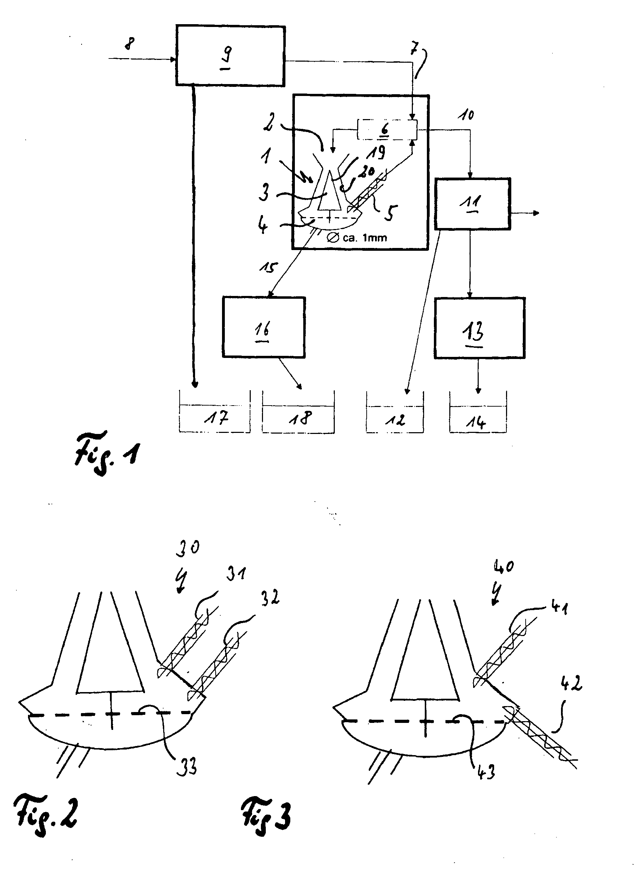

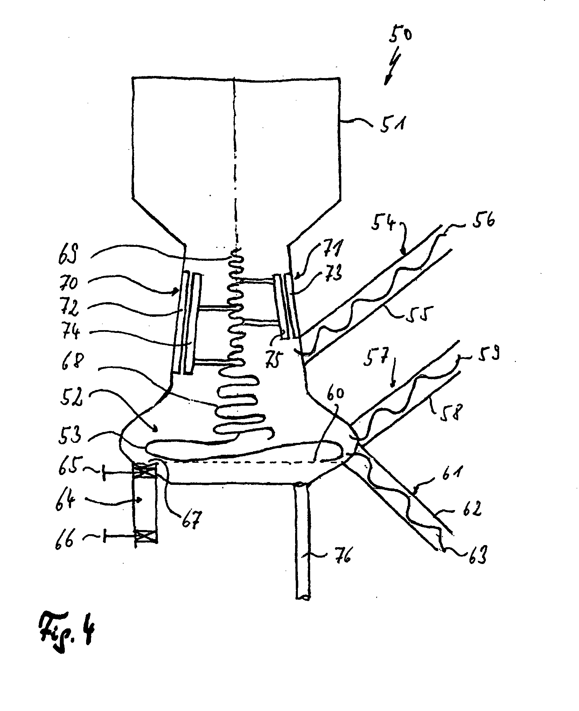

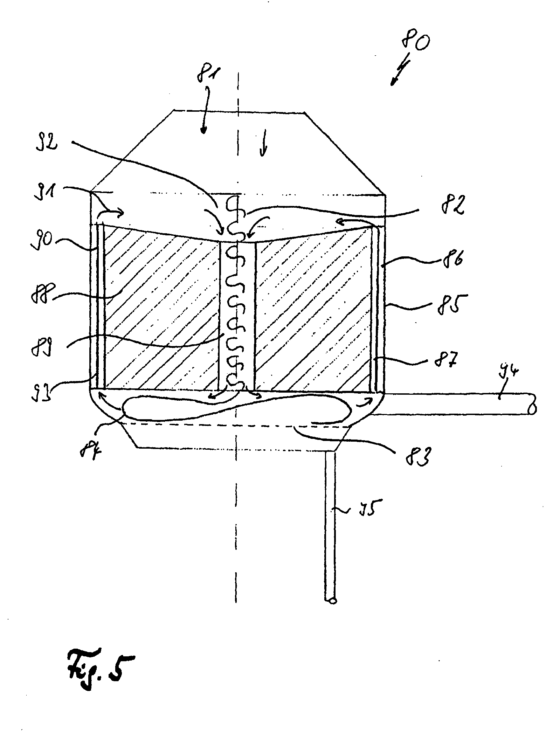

- Figur 1: schematisch einen Schnitt durch einen Pulper und dessen Einbindung in die Materialströme

Der in der Figur 1 gezeigte Pulper 1 hat eine Eintragsöffnung 2, eine als Fördereinrichtung 3 dienende Schraube und unterhalb der Schraube ein Lochblech 4. Dieses Lochblech 4 hat runde Löcher mit einem Durchmesser von etwa 1 mm. An Stelle von runden Löchern, können auch Löcher mit anderen Geometrien vorgesehen werden. In diesem Fall haben die Löcher entsprechend freie Durchgangsflächen. Relevant können auch Schlitze sein.

Oberhalb des Lochblechs ist im unteren Bereich des Pulpers 1 eine Entnahmeeinrichtung 5 vorgesehen, die es ermöglicht Gemenge aus dem Bereich oberhalb des Lochblechs 4, beispielsweise mittels einer Schraube, zu einer Sammeleinrichtung 6 zu fördern. Diese Sammeleinrichtung 6 arbeitet nach dem "First In First Out"-Prinzip. Daher ist im hinteren Bereich der Sammeleinrichtung 6 die Verbindung mit der Entnahmeeinrichtung 5 gezeichnet, während am gegenüber liegenden Ende die Sammeleinrichtung 6 mit der Eintragsöffnung 2 des Pulpers 1 in Verbindung steht.

Zur Sammeleinrichtung 6 führt ein weiterer Zulauf 7, mit dem beispielsweise Spuckstoffe oder auch andere, insbesondere Fasern enthaltende Gemenge 8, dem Sammler zugeführt werden. In einer Vorbehandlung 9 kann beispielsweise eine Entzerrung und Zerkleinerung auf ca. 30 x 30 mm erfolgen. Außerdem können hier Metalle und Sande 17 bereits entfernt werden, damit diese nicht in den Pulper gelangen.

Der Sammler hat eine Entleerungseinrichtung 10, um die Rückstände einer PVC- und Polyolefin-Abtrennung 11 zuzuführen. Der Rest gelangt als Schwerstoff beispielsweise in einen Sammelbehälter für Ersatzbrennstoffe 12. Eine andere Fraktion wird als Polyolefine zunächst einer Trocknung und Kompaktierung 13 zugeführt und dann als Polyolefine 14 gesammelt.

Unterhalb des Lochblechs 4 wird aus dem Pulper 1 Faserdünnstoff 15 abgezweigt. Dieser Faserdünnstoff wird einer Eindickung 16 zugeführt. Nach dieser Eindickung liegt der Faserstoff in Form von Maschinenstoff 18 vor.

Erfreulicherweise hat sich bei der Behandlung von Spuckstoffen gezeigt, dass im Pulper härtere Bestandteile, wie beispielsweise Kunststoffe, am Boden kratzen und auch die extrem kleinen Löcher des Bodens nicht verstopfen, sondern immer wieder freilegen. Eine gute Förderung im Pulper wird mit der Schraube 3 erzielt, deren Hüllkurve 19 oberhalb der über dem Lochblech 4 angeordneten Entnahmeeinrichtung 5 etwa parallel zur Pulperwandung 20 und vorzugsweise nach oben in einem konisch zusammenlaufenden Spalt zwischen Hüllkurve 19 der Schraube 3 und Pulperwandung 20 verläuft. Zwischen der Hüllkurve 19 und der Pulperwandung 20 besteht somit ein Spalt, der je nach Pulperausführung unterschiedlich breit ausgebildet sein kann und eine Zuführung von nach oben kommendem Material zur Schraube bewirkt.

Die Figur 1 zeigt nur ein mögliches Ausführungsbeispiel. Der Fachmann erkennt, dass es hierzu unzählige Variationen gibt. Beispielsweise für Altpapier können aus dem ersten Pulper Gemengestoffe entnommen werden und einem zweiten Pulper zugeführt werden. Im vorliegenden Fall kann hierzu die Entnahmeeinrichtung 5 oder ein Auslass am Sammler 6 dienen.

## Patentansprüche

1. Pulper (1), bei dem oberhalb eines Lochbleches (4) eine Entnahmeeinrichtung (5) angeordnet ist, die mit einer Sammeleinrichtung (6) verbunden ist, die mit einer Eintragsöffnung des Pulpers in Verbindung steht, **dadurch gekennzeichnet dass** die Sammeleinrichtung (6) für einen Betrieb zwischen Entnahmeeinrichtung (5) und Eintragsöffnung (2) nach dem "First In First Out"-Prinzip ausgebildet ist.

2. Pulper (1), nach Anspruch 1, ***dadurch gekennzeichnet, dass*** die Sammeleinrichtung (6) eine Fördereinrichtung aufweist.

3. Pulper (1), nach einem der Ansprüche 1 bis 2, ***dadurch gekennzeichnet, dass*** die Sammeleinrichtung (6) einen weiteren Zulauf (7) für Gemenge und einen Ablauf (10) für seine Entleerung aufweist.

4. Pulper (1), nach einem der vorhergehenden Ansprüche, ***dadurch gekennzeichnet, dass*** der Pulper über dem Lochblech (4) eine Höhe von über 2 m aufweist.

5. Pulper (1), nach einem der vorhergehenden Ansprüche, ***dadurch gekennzeichnet, dass*** der Pulper über dem Lochblech (4) eine interne Fördereinrichtung aufweist, die eine Höhe von über 80 % der Pulperhöhe über dem Lochblech aufweist.

6. Pulper (1), nach Anspruch 5, ***dadurch gekennzeichnet, dass*** die Fördereinrichtung eine Höhe von über 80 % der Gemengehöhe über dem Lochblech aufweist.

7. Pulper (1) nach einem der Ansprüche 5 oder 6, ***dadurch gekennzeichnet, dass*** die Fördereinrichtung eine senkrechte Schraube aufweist, die oben und unten gelagert ist.

8. Pulper (1), nach einem der Ansprüche 5 bis 7, ***dadurch gekennzeichnet, dass*** die Fördereinrichtung eine Schraube aufweist, deren Hüllkurve oberhalb einer über dem Lochblech (4) angeordneten Entnahmeeinrichtung (5) konisch zur Pulperwandung verläuft.

9. Pulper (1), nach einem der vorhergehenden Ansprüche, ***gekennzeichnet durch*** eine Schraube, die in ihrem unteren Bereich eine Spirale aufweist, die einen größeren Durchmesser als der obere Bereich der Schraube aufweist und deren Hüllkurve etwa der Form der Pulperwandung in diesem Bereich nachgeführt ist.

10. Pulper (1), nach einem der vorhergehenden Ansprüche, ***gekennzeichnet durch*** er einen Pulperaufsatz zur Suspensionsverdünnung aufweist.

11. Pulper (1), nach einem der vorhergehenden Ansprüche, ***dadurch gekennzeichnet, dass*** er eine weitere Schraube zum Einzug des Gemenges aufweist.

12. Pulper (1), nach einem der vorhergehenden Ansprüche, ***dadurch gekennzeichnet, dass*** er an seiner Innenseite abgerundete und polierte Übergänge aufweist.

13. Pulper (1), nach einem der vorhergehenden Ansprüche, ***dadurch gekennzeichnet, dass*** er eine Schraube mit abgerundeten und polierten Übergängen aufweist.

14. Pulper (1), nach einem der vorhergehenden Ansprüche, ***dadurch gekennzeichnet, dass*** das Lochblech (4) zumindest an seiner Oberseite poliert ist.

15. Pulper (1), nach einem der vorhergehenden Ansprüche, ***dadurch gekennzeichnet*, *dass*** das Lochblech (4) mehrere Lochplatten aufweist.

16. Pulper (1), nach Anspruch 15, ***dadurch gekennzeichnet, dass*** die Lochplatten in Lochträgerplatten montiert sind

## Claims

1. A pulper (1), in which a withdrawal device (5) is arranged above a perforated metal sheet (4) and connected to a collecting device (6) that in turn is connected to a feed opening of the pulper, ***characterized in that*** the collecting device (6) is designed for operating in accordance with the "First In First Out" principle between the withdrawal device (5) and the feed opening (2).

2. The pulper (1) according to claim 1, ***characterized in that*** the collecting device (6) features a conveyor.

3. The pulper (1) according to claim 1 or 2, ***characterized in that*** the collecting device (6) features an additional inlet (7) for mixtures and an outlet (10) for being emptied.

4. The pulper (1) according to one of the preceding claims, ***characterized in that*** the pulper has a height of more than 2 m above the perforated metal sheet (4).

5. The pulper (1) according to one of the preceding claims, ***characterized in that*** the pulper features an internal conveyor above the perforated metal sheet (4), wherein the internal conveyor has a height of more than 80% of the pulper height above the perforated metal sheet.

6. The pulper (1) according to claim 5, ***characterized in that*** the conveyor has a height of more than 80% of the mixture height above the perforated metal sheet.

7. The pulper (1) according to claim 5 or 6, ***characterized in that*** the conveyor features a vertical screw that is supported in bearings on the upper and the lower end.

8. The pulper (1) according to one of claims 5 to 7, ***characterized in that*** the conveyor features a screw, the envelope of which extends conically to the pulper wall above a withdrawal device (5) that is arranged above the perforated metal sheet (4).

9. The pulper (1) according to one of the preceding claims, ***characterized by*** a screw that in its lower region features a spiral with a larger diameter than the upper region of the screw, wherein the envelope of said screw approximately follows the shape of the pulper wall in this region.

10. The pulper (1) according to one of the preceding claims, ***characterized in that*** it features a suspension dilution attachment.

11. The pulper (1) according to one of the preceding claims, ***characterized in that*** it features an additional screw for the infeed of the mixture.

12. The pulper (1) according to one of the preceding claims, ***characterized in that*** it features rounded and polished transitions on its inner side.

13. The pulper (1) according to one of the preceding claims, ***characterized in that*** it features a screw with rounded and polished transitions.

14. The pulper (1) according to one of the preceding claims, ***characterized in that*** the perforated metal sheet (4) is polished at least on its upper side.

15. The pulper (1) according to one of the preceding claims, ***characterized in that*** the perforated metal sheet (4) features several perforated plates.

16. The pulper (1) according to claim 15, ***characterized in that*** the perforated plates are mounted in perforated carrier plates.

## Revendications

1. Pulpeur (1), dans lequel un dispositif de prélèvement (5) est disposé au-dessus d'une tôle perforée (4), qui est relié à un dispositif collecteur (6) en liaison avec une ouverture de chargement du pulpeur, ***caractérisé en ce que*** le dispositif collecteur (6) est conçu pour un fonctionnement selon le principe « first in first out » entre le dispositif de prélèvement (5) et l'ouverture de chargement (2).

2. Pulpeur (1) selon la revendication 1, ***caractérisé en ce que*** le dispositif collecteur (6) présente un dispositif de transport.

3. Pulpeur (1) selon la revendication 1 ou 2, ***caractérisé en ce que*** le dispositif collecteur (6) présente une alimentation (7) supplémentaire pour un mélange et une évacuation (10) pour son vidage.

4. Pulpeur (1) selon l'une des revendications précédentes, ***caractérisé en ce que*** le pulpeur présente une hauteur de plus de 2 m au-dessus de la tôle perforée (4).

5. Pulpeur (1) selon l'une des revendications précédentes, ***caractérisé en ce que*** le pulpeur présente un dispositif de transport interne au-dessus de la tôle perforée (4), qui présente une hauteur de plus de 80 % de la hauteur du pulpeur au-dessus de la tôle perforée.

6. Pulpeur (1) selon la revendication 5, ***caractérisé en ce que*** le dispositif de transport présente une hauteur de plus de 80 % de la hauteur du mélange au-dessus de la tôle perforée.

7. Pulpeur (1) selon la revendication 5 ou 6, ***caractérisé en ce que*** le dispositif de transport présente une vis verticale qui est disposée sur le haut et sur le bas.

8. Pulpeur (1) selon l'une des revendications 5 à 7, ***caractérisé en ce que*** le dispositif de transport présente une vis, dont la courbe enveloppe passe de façon conique à la paroi du pulpeur, au-dessus d'un dispositif de prélèvement (5) disposé au-dessus de la tôle perforée (4).

9. Pulpeur (1) selon l'une des revendications précédentes, ***caractérisé par*** une vis qui présente une spirale dans sa partie inférieure qui présente un diamètre plus grand que la partie supérieure de la vis et dont la courbe enveloppe suit environ la forme de la paroi du pulpeur dans cette partie.

10. Pulpeur (1) selon l'une des revendications précédentes, ***caractérisé par*** un chapeau de pulpeur pour diluer la suspension.

11. Pulpeur (1) selon l'une des revendications précédentes, ***caractérisé en ce* qu'**il présente une vis supplémentaire pour enfoncer le mélange.

12. Pulpeur (1) selon l'une des revendications précédentes, ***caractérisé en ce* qu'**il présente des jonctions arrondies et polies sur sa face intérieure.

13. Pulpeur (1) selon l'une des revendications précédentes, ***caractérisé en ce* qu'**il présente une vis avec des jonctions arrondies et polies.

14. Pulpeur (1) selon l'une des revendications précédentes, *caractérisé en ce la* tôle perforée (4) est au moins polie sur sa face supérieure.

15. Pulpeur (1) selon l'une des revendications précédentes, *caractérisé en ce* la tôle perforée (4) présente plusieurs plaques perforées.

16. Pulpeur (1) selon la revendication 15, ***caractérisé en ce que*** les plaques perforées sont montées dans des plaques porteuses perforées.
